# EUROPÄISCHE PATENTSCHRIFT

(11) **EP 3 363 005 B1**
(45) Veröffentlichungstag und Bekanntmachung des Hinweises auf die Patenterteilung: **24.04.2019**
(21) Anmeldenummer: 17703051.7
(22) Anmeldetag: 25.01.2017
(51) Int. Cl.: G08G 1/16, G08G 1/0967, H04L 29/08, H04W 4/46

(54) **VERFAHREN ZUR ERMITTLUNG UND BEREITSTELLUNG EINER AUF EINE VORBESTIMMTE UMGEBUNG BEZOGENEN, UMFELDDATEN ENTHALTENDEN DATENBANK**
METHOD FOR ASCERTAINING AND PROVIDING A DATABASE WHICH RELATES TO A SPECIFIED SURROUNDING AREA AND CONTAINS ENVIRONMENTAL DATA
PROCÉDÉ DE DÉTERMINATION ET DE MISE À DISPOSITION D'UNE BANQUE DE DONNÉES LIÉE À UN ENVIRONNEMENT PRÉDÉFINI, CONTENANT DES DONNÉES D'ENVIRONNEMENT

(30) Priorität: 03.03.2016 DE 102016002603
(43) Veröffentlichungstag der Anmeldung: 22.08.2018
(73) Patentinhaber: AUDI AG, 85045 Ingolstadt (DE)
(72) Erfinder: ALTINGER, Harald, 85049 Gerolfing (DE); SIPPL, Christoph, 93176 Beratzhausen (DE)
(86) Internationale Anmeldenummer: PCT/EP2017/051487
(87) Internationale Veröffentlichungsnummer: WO 2017/148623

(56) Entgegenhaltungen:
- DE-A1- 19 903 909
- DE-A1-102014 204 694
- US-A1- 2005 088 318
- US-A1- 2010 093 383
- US-A1- 2011 087 433

## Beschreibung

Die Erfindung betrifft ein Verfahren zur Ermittlung und Bereitstellung einer auf eine vorbestimmte Umgebung bezogenen, Umfelddaten bezüglich wenigstens der dynamischen Objekte der Umgebung enthaltenden Datenbank, wobei die Umfelddaten durch Sensoren wenigstens eines Kraftfahrzeugs ermittelt werden.

Die Umfeldwahrnehmung und -interpretation stellt für eine zunehmende Anzahl von Fahrzeugsystemen in Kraftfahrzeugen eine wesentliche Aufgabe dar, insbesondere in pilotierten, mithin vollständig automatisch geführten Kraftfahrzeugen mit einem entsprechenden, zur vollständig automatischen Führung des Kraftfahrzeugs ausgebildeten Fahrzeugsystem. Insbesondere ist zur Fahrtplanung in pilotierten Kraftfahrzeugen oder zur Unterstützung des Fahrers mittels Fahrerassistenzsystemen eine vollständige Detektion aller dynamischen Objekte im Umfeld des Kraftfahrzeugs unabdingbar, was insbesondere für Umgebungen gilt, in denen sich komplexe Verkehrssituationen einstellen. Ein klassisches Beispiel für eine solche Umgebung ist eine Kreuzung, an der Verkehrsteilnehmer aus verschiedensten Richtungen und verschiedenster Art aufeinander treffen.

Zur Detektion dynamischer (und gegebenenfalls auch statischer) Objekte sind in den Kraftfahrzeugen üblicherweise Sensoren (Umfeldsensoren) verbaut, beispielsweise Radarsensoren, Kameras und dergleichen, auf deren Umfelddaten Algorithmen zur Situationsinterpretation aufsetzen. Dabei sind Ansätze bekannt, bei denen die Interpretation der Umfelddaten, beispielsweise die Erstellung einer von weiteren Fahrzeugsystemen bzw. deren Funktionen genutzter Umfeldkarten, nur auf Umfelddaten der Sensorik des eigenen Kraftfahrzeugs basiert. Dabei bleiben bestimmte, beispielsweise abgeschattete, Bereiche uneinsehbar; weiterhin ist die Erfassung durch die Möglichkeiten der eigenen Sensorik beschränkt.

Mithin wurde bereits vorgeschlagen, eigene Umfelddaten mit denen anderer Kraftfahrzeuge durch Nutzung von Kraftfahrzeug-zu-Kraftfahrzeug-Kommunikation zu ergänzen. So offenbart beispielsweise DE 10 2008 042 565 A1 ein Verfahren zum Betreiben einer Fahrerassistenzeinrichtung, bei dem der Fahrerassistenzeinrichtung von mindestens einer externen Einrichtung externe Sensordaten über eine Verkehrssituation bereitgestellt und diese externen Sensordaten für den Betrieb der Fahrerassistenzeinrichtung benutzt werden. Bei der mindestens einen weiteren Einrichtung kann es sich um ein Fahrzeug und/oder eine fest installierte Infrastruktureinrichtung handeln, wobei zur Regulierung des Austauschs der Sensordaten vorgeschlagen wird, diese dem Fahrzeug beispielsweise auf Anfrage und/oder nach einer Autorisierung bereitzustellen.

Hiermit ist bereits eine deutliche Verbesserung gegeben, jedoch existiert ein enormer Datenverkehr zwischen den verschiedenen Kraftfahrzeugen, die alle ihren eigenen Datenpool bezüglich der Umgebung, in der sich das Kraftfahrzeug zur Zeit bewegt, durch Anfragen entsprechend befüllen. Gerade in Umgebungen, in denen eine Vielzahl von Kraftfahrzeugen und gegebenenfalls sonstigen Verkehrsteilnehmern vorhanden sind, ergibt sich hierdurch ein massiver, die Durchführung eines derartigen Vorgehens beeinträchtigender Datenverkehr. Zudem gehen gesammelte Daten spätestens dann verloren, wenn ein Verkehrsteilnehmer die Umgebung verlässt.

DE 10 2007 048 809 A1 betrifft ein Verfahren und eine Vorrichtung zur Erkennung von verdeckten Objekten im Straßenverkehr. Dort wird ein ständiger Austausch von Informationen zwischen allen im Umfeld befindlichen Fahrzeugen vorgenommen, nachdem die Information an im Umfeld befindliche Fahrzeuge mittels einer Schnittstelle zur Fahrzeug zu Fahrzeug-Kommunikation übertragen und von den im Umfeld befindlichen Fahrzeugen empfangen werden. damit wird ein eigenes Umfeldmodell erweitert. Es werden Positions- und Dynamikinformationspakete übermittelt.

Der Erfindung liegt daher die Aufgabe zugrunde, eine Möglichkeit zur insbesondere kommunikationseffektiven Bereitstellung möglichst genauer, ausführlicher Informationen über eine vorbestimmte Umgebung anzugeben.

Zur Lösung dieser Aufgabe ist bei einem Verfahren der eingangs genannten Art erfindungsgemäß vorgesehen, dass die Datenbank durch ein als Server dienendes Kraftfahrzeug in der vorbestimmten Umgebung vorgehalten wird, welches als zentrale Datensammelstelle dient und zur Kommunikation mit anderen Kraftfahrzeugen ausgebildet ist, wobei das als Server dienende Kraftfahrzeug bei Empfang einer Anfragenachricht wenigstens einen Teil der Umfelddaten der Datenbank an das anfragende Kraftfahrzeug übermittelt und zur Aktualisierung der Datenbank zum einen eine Abfragenachricht zur Übersendung von wenigstens die dynamischen Objekte betreffenden Umfelddaten an andere Kraftfahrzeuge übersendet und zum anderen mittels eigener Sensoren wenigstens die dynamischen Objekte betreffende Umfeldddaten aufnimmt, wobei die Datenbank anhand der übersendeten und. aufgenommenen Umfelddaten aktualisiert wird.

Dabei kann die Datenbank bevorzugt als eine Umfeldkarte ausgebildet sein, in der auch statische Objekte der Umgebung verzeichnet sind. Um eine Szeneninterpretation und/oder eine weitere Fahrtplanung basierend auf möglichst genauen Umfelddaten zu gewährleisten, schlägt die vorliegende Erfindung vor, zentral in einem Kraftfahrzeug einen Datenpool in Form der Datenbank (Umfeldkarte) zu schaffen, der alle benötigten Informationen enthält. Diese Datenbank ist in einem zu definierenden, insbesondere wenigstens die vorbestimmte Umgebung umfassenden Umkreis um das als Server dienende Kraftfahrzeug sichtbar und kann dynamisch von dem als Server dienenden Kraftfahrzeug und von anderen Kraftfahrzeugen sowie gegebenenfalls weiteren Verkehrsteilnehmern, so diese zu einer entsprechenden Kommunikation ausgebildet sind, erweitert werden. Andere Kraftfahrzeuge und gegebenenfalls auch andere weitere Verkehrsteilnehmer können über eine Anfragenachricht, die bevorzugt bei Unkenntnis des Servers als Broadcast übersendet wird, Anfragen zur vorbestimmten Umgebung stellen, wobei entsprechend der Anfrage wenigstens ein Teil der Datenbank an das entsprechende Kraftfahrzeug geliefert wird.

Eine solche Datenbank, die von mehreren Kraftfahrzeugen und gegebenenfalls weiteren Verkehrsteilnehmern befüllt wird, ermöglicht die Durchführung von Situationsinterpretationen in vollständiger und genauer Weise auch dann, wenn mittels eigener Sensorik, beispielsweise durch Verdeckung, nicht alle benötigten Umfelddaten erhalten werden können. Insbesondere kann auch zunächst überprüft werden, ob in der Datenbank bereits alle benötigten Informationen zu einem dynamischen Objekt vorhanden sind, so dass im eigenen Kraftfahrzeug eine Auswertung von entsprechenden Umfelddaten unterlassen werden kann und frei werdende Rechenleistung anderweitig genutzt werden kann oder sogar Energie gespart werden kann.

Dadurch, dass ein Kraftfahrzeug als eine Art zentraler Server fungiert, entsteht nicht nur eine zentrale Datensammelstelle, die alle verfügbaren Informationen zu wenigstens dynamischen Objekten in der vorbestimmten Umgebung möglichst genau enthält, sondern auch eine Reduzierung des allgemeinen Datenverkehrs, da Anfragen nur vom Server beantwortet werden müssen. Der Datenpool kann an einer zentralen Stelle immer aktuell gehalten werden und passt sich so dynamisch an die aktuell tatsächlich vorliegende Verkehrssituation an. Wird, worauf im Folgenden noch genauer eingegangen wird, die Datenbank von als Server dienendem Kraftfahrzeug zu als Server dienendem Kraftfahrzeug weitergereicht und somit in der vorbestimmten Umgebung gehalten, gehen keine Informationen verloren, wobei dennoch ständig eine hochaktuelle und hochgenaue Datenbank erhalten bleibt.

Die Aktualisierung der Datenbank seitens des als Server dienenden Kraftfahrzeugs kann nicht nur anhand von eigenen Sensordaten der eigenen Sensorik erfolgen, sondern auch, indem der Server Umfelddaten anderer Kraftfahrzeuge bzw. von deren Sensoren mit einer Abfragenachricht abfragt. Die als Reaktion auf die Abfragenachricht von anderen Kraftfahrzeugen übersendeten Umfelddaten werden dann auch bei der Aktualisierung berücksichtigt.

Zur Kommunikation mit anderen Kraftfahrzeugen weisen die am Verfahren teilnehmenden Kraftfahrzeuge bevorzugt eine Kraftfahrzeug-zu-Kraftfahrzeug-Kommunikationseinrichtung (c2c-Kommunikationseinrichtung), die einen Sender und einen Empfänger umfassen kann. Dabei kann ein im Rahmen der Kraftfahrzeug-zu-Kraftfahrzeug-Kommunikation verwendeter Standard, insbesondere ein WLAN-Standard, eingesetzt werden. Es sei ferner darauf hingewiesen, dass es grundsätzlich denkbar ist, in jedem Kraftfahrzeug für sich auch eine Umfeldkarte oder eine vergleichbare Datenstruktur vorzuhalten, in die dann die Umfelddaten der Datenbank, die vom Server übertragen wurden, eingetragen werden können, wobei die entsprechende Umfeldkarte bzw. allgemeine Datenstruktur des jeweiligen Kraftfahrzeugs, derart ergänzt, von wenigstens einer Funktion eines Fahrzeugsystems, insbesondere eines Fahrerassistenzsystems und/oder eines zur vollständig automatischen Führung des Kraftfahrzeugs ausgebildeten Fahrzeugsystems, genutzt wird.

Bei der vorbestimmten Umgebung im Rahmen der vorliegenden Erfindung kann es sich insbesondere um eine Kreuzung und/oder einen Bereich um einen Fußgängerübergang handeln. Dort treten als dynamische Objekte insbesondere Fußgänger auf, die besonders zu schützen sind. Fußgänger halten sich zudem meist für eine längere Zeit in der vorbestimmten Umgebung auf als passierende Kraftfahrzeuge, so dass sich hier die besonderen Vorteile der vorliegenden Erfindung zeigen, wenn ständig verfeinerte und dynamisch aktualisierte Umfelddaten auch über die Anwesenheitszeit von Kraftfahrzeugen in der vorbestimmten Umgebung hinaus erhalten bleiben.

Insbesondere diesbezüglich sieht eine bevorzugte Weiterbildung der vorliegenden Erfindung vor, dass bei Eintritt eines Übergabekriteriums das bisher als Server dienende Kraftfahrzeug die Datenbank an ein als neuer Server dienendes Kraftfahrzeug übermittelt, welches die Serverrolle übernimmt. Ist also ein Übergabekriterium erfüllt, wechselt die Serverrolle, insbesondere an ein Kraftfahrzeug, von dem noch eine längere Anwesenheit in der vorbestimmten Umgebung erwartet wird und/oder das über seine eigene Sensorik eine besonders verlässliche Datenquelle zur Aktualisierung der Datenbank bereitstellt. Dabei sind verschiedene Varianten sowohl des Übergabekriteriums als auch der Übermittlung möglich. Stellt beispielsweise ein Kraftfahrzeug, das zur Zeit als Server dient, fest, dass das Übergabekriterium erfüllt ist, kann es die Datenbank als Broadcast versenden. Andere Kraftfahrzeuge können dann, beispielsweise anhand eines Serverkriteriums, worauf im Folgenden noch näher eingegangen werden wird, überprüfen, ob das jeweilige Kraftfahrzeug selbst als neuer Server dienen soll, wobei dieses Kraftfahrzeug dann die Datenbank abspeichert und die Serverrolle übernimmt. Denkbar ist es natürlich auch, dass im als bisheriger Server dienenden Kraftfahrzeug bei Erfüllung des Übergabekriteriums bereits feststellbar ist, welches andere Kraftfahrzeug das Serverkriterium erfüllt, mithin als neuer Server zu verwenden ist, so dass auch eine gezielte Kommunikation an dieses Kraftfahrzeug erfolgen kann. Schließlich ist es sogar möglich, dass die Erfüllung der Übergabebedingung in einem anderen Kraftfahrzeug festgestellt wird, beispielsweise, dass das Serverkriterium für dieses feststellende Kraftfahrzeug nun erfüllt ist (und somit nicht mehr für den bisherigen Server erfüllt sein kann). Dann kann das Kraftfahrzeug, für das das Serverkriterium erfüllt ist, die Datenbank gezielt bei dem als bisheriger Server dienenden Kraftfahrzeug anfordern und die Serverrolle übernehmen.

Vorzugsweise kann im Rahmen des Übergabekriteriums überprüft werden, ob ein weiteres, als zukünftiger Server dienendes Kraftfahrzeug näher an wenigstens einem durch die Kraftfahrzeuge detektierbaren, ausgezeichneten Ort innerhalb der Umgebung befindlich ist als das aktuell als Server dienende Kraftfahrzeug, und/oder, ob das aktuell als Server dienende Kraftfahrzeug die vorbestimmte Umgebung verlässt. Ein Serverkriterium kann also sein, dass das Kraftfahrzeug die Serverrolle übernimmt, welches sich am nächsten an einem ausgezeichneten Ort innerhalb der vorbestimmten Umgebung befindet. Das entsprechende Kraftfahrzeug wird im Fall einer Übergabe dann als neuer Server ausgewählt. Dabei ist auch eine Kombination denkbar, das bedeutet, wenn das aktuell als Server dienende Kraftfahrzeug die vorbestimmte Umgebung verlässt (Übergabekriterium), kann überprüft werden, welches weitere Kraftfahrzeug sich am nächsten an dem ausgezeichneten Ort innerhalb der Umgebung befindet (Serverkriterium) und als neuer Server zu dienen hat. Diese letztgenannte Ausgestaltung ist bevorzugt, nachdem es dann nicht zu äußerst häufigen Wechseln der Serverrolle kommt, sondern eine nach einem bestimmten Serverkriterium vergebene Serverrolle solange beibehalten werden kann, wie das als Server dienende Kraftfahrzeug innerhalb der vorbestimmten Umgebung befindlich ist, wobei selbstverständlich auch allgemein die Kommunikationsreichweite des als Server dienenden Kraftfahrzeugs wenigstens die Umgebung erfassen sollte, wie bereits dargelegt wurde.

Zweckmäßigerweise kann der Ort auf ein statisches und/oder dynamisches Objekt in der Umgebung bezogen sein. Beispielsweise kann im Fall des Bereichs eines Fußgängerübergangs als vorbestimmte Umgebung die Nähe von Kraftfahrzeugen zu dem Fußgängerübergang als Serverkriterium oder gegebenenfalls auch Übergabekriterium betrachtet werden. Bei einer Kreuzung bietet sich beispielsweise ein detektierbares statisches Objekt im eigentlichen Kreuzungsbereich an, beispielsweise ein bestimmtes Schild oder dergleichen. Es ist jedoch auch denkbar, den Ort auf ein dynamisches Objekt zu beziehen, beispielsweise einen bestimmten, ausgewählten Fußgänger oder dergleichen, wobei das dynamische Objekt, welches den Ort definiert, dann insbesondere aufgrund eines Auswahlkriteriums ebenfalls dynamisch zu bestimmen ist. Das Auswahlkriterium kann beispielsweise überprüfen, ob ein die Sicherheitskritikalität der aktuellen Verkehrssituation für das dynamische Objekt beschreibende Kritikalitätswert am höchsten ist. Ein solches dynamisches Objekt zur Definition des Ortes heranzuziehen ist von daher zweckmäßig, dass dann das kritischste dynamische Objekt, von dem am ehesten Umfelddaten benötigt werden, verwendet wird, um ein Kraftfahrzeug als Server zu bestimmen, das sich möglichst nah an diesem kritischen Objekt befindet, mithin optimal über seine Sensorik auch eigene, zur Aktualisierung dienende Umfelddaten des Objekts aufnehmen und in die Datenbank einfließen lassen kann.

In Weiterbildung der vorliegenden Erfindung kann vorgesehen sein, dass die Umfelddaten der Datenbank, insbesondere unter Berücksichtigung einer in der Anfragenachricht enthaltenen relativen Positionsinformation, vor der Übermittlung auf ein Koordinatensystem des anfragenden Kraftfahrzeugs und/oder ein globales Koordinatensystem umgerechnet werden. Liegen mithin die Umfelddaten der Datenbank nicht ohnehin in einem globalen, für alle Kraftfahrzeuge nutzbaren Koordinatensystem vor oder ist der Empfang bereits in einem auf das eigene Kraftfahrzeug bezogenen Koordinatensystem gewünscht, kann bereits vor dem Versenden eine entsprechende Umrechnung erfolgen, denn die relative Position des anfragenden Kraftfahrzeugs zum als Server dienenden Kraftfahrzeug bzw. eine allgemeine absolute Positionsinformation zu dem als Server dienenden Kraftfahrzeug vorliegen.

Sowohl im soeben diskutierten Fall wie auch bei der Überprüfung von Übergabekriterien, Serverkriterien und dergleichen muss letztlich eine Zuordnung von möglichen Kommunikationspartnern und selbst detektierten bzw. in der Datenbank beschriebenen Objekten hergestellt werden, um eine sinnvolle Kommunikation zu ermöglichen. Hierzu sieht eine zweckmäßige Weiterbildung der vorliegenden Erfindung vor, dass zur Zuordnung von durch die Kraftfahrzeug-zu-Kraftfahrzeug-Kommunikation erreichbaren Kraftfahrzeugen zu in der Datenbank enthaltenen Objekten von den Kraftfahrzeugen empfangene Umfelddaten mit den auf ein Koordinatensystem des aktuell als Server dienenden Kraftfahrzeugs bezogenen Umfelddaten in der Datenbank abgeglichen werden. Zweckmäßig ist es also, wenn grundsätzlich im Rahmen der Kommunikation gewisse Umfelddaten enthalten sind, durch die eine Positionierung des Kraftfahrzeugs in der Datenbank, insbesondere einer Umfeldkarte, und somit eine Zuordnung zu einem bestimmten, durch die Umfelddaten der Datenbank beschriebenen Objekt ermöglicht wird. Dabei kann beispielsweise jede im erfindungsgemäßen Verfahren verwendete Nachricht eine aktuelle, absolute Ego-Position des sendenden Kraftfahrzeugs und/oder eine relative Positionsangabe zu einem bestimmten statischen Objekt enthalten, wobei es selbstverständlich auch denkbar ist, insbesondere bei einer Antwort auf eine Abfragenachricht, dass Umfelddaten zu mehreren detektierbaren Objekten enthalten sind, was eine kombinatorische Zuordnung zu Objekten innerhalb der Datenbank, die insbesondere als Umfeldkarte ausgebildet ist, erlaubt. So ist es insbesondere auch möglich, bei Übergabekriterien und Serverkriterien als neuer Server dienende Kraftfahrzeuge zu identifizieren bzw. die eigene Rolle relativ zu der von anderen Kraftfahrzeugen zu beurteilen. Eine einmal getroffene Zuordnung kann selbstverständlich auch in der Datenbank gespeichert werden, beispielsweise kann einem einem dynamischen Objekt entsprechenden Kraftfahrzeug eine Identifizierungsinformation zugeordnet werden, die im Rahmen der Kraftfahrzeug-zu-Kraftfahrzeug-Kommunikation genutzt wird.

Eine zweckmäßige Weiterbildung der vorliegenden Erfindung sieht vor, dass in die Datenbank auch statische, einen verkehrsrelevanten, wechselnden Zustand aufweisende Objekte aufgenommen werden. Während selbstverständlich grundsätzlich statische Objekte auch Teil der Umfelddaten in der Datenbank sein können, bietet es sich besonders an, ihren Zustand dynamisch wechselnde statische Objekte nebst einer Zustandsinformation in den Umfelddaten der Datenbank aufzunehmen. Ein klassisches Beispiel hierfür ist eine Ampel, deren Schaltzustand zweifelsohne einen Einfluss auf die Bewertung der aktuellen Verkehrssituation hat.

In Bezug auf statische Objekte in der vorbestimmten Umgebung ist es besonders zweckmäßig, wenn bei einer Neuerstellung oder Aktualisierung der Datenbank neben übersendeten bzw. aufgenommenen Umfelddaten und/oder zur Einordnung von auf eine Anfragenachricht von dem als Server dienenden Kraftfahrzeug erhaltener Umfelddaten eine von einer feststehenden Servereinrichtung erhaltene, statische Objekte in der vorbestimmten Umgebung beschreibende Basiskarte verwendet wird. Eine derartige Basiskarte kann beispielsweise aus einer sogenannten Cloud für die vorbestimmte Umgebung heruntergeladen werden. Sie enthält bevorzugt die in der vorbestimmten Umgebung vorliegenden statischen Objekte, beispielsweise Straßenverläufe, Gebäude, Schilder und dergleichen. Diese müssen nicht zwangsläufig dynamisch neu vermessen und bewertet werden, da sie unveränderlich sind. Damit bietet eine derartige Basiskarte eine hervorragende Grundlage, um darauf basierend die auf dynamische Objekte und gegebenenfalls ihren Zustand wechselnde statische Objekte fokussierte Datenbank aufzubauen. Auch lässt sich eine solche Basiskarte zweckmäßig von anfragenden Kraftfahrzeugen nutzen.

Vorzugsweise kann die Anfragenachricht eine eine bestimmte Subumgebung der vorbestimmten Umgebung beschreibende Auswahlinformation enthalten, wobei nur Umfelddaten der Subumgebung an das anfragende Kraftfahrzeug übermittelt werden. Auf diese Weise ist es möglich, den Datenverkehr im Bereich der vorbestimmten Umgebung weiter zu reduzieren, nachdem nicht die gesamte Datenbank übertragen werden muss, sondern eine Einschränkung auf relevante Subumgebungen der vorbestimmten Umgebung ermöglicht wird, beispielsweise dem anfragenden Kraftfahrzeug in Bewegungsrichtung vorausliegende Subumgebungen. Besonders vorteilhaft ist es ferner, wenn die Subumgebung als nicht oder nicht vollständig durch Sensoren des anfragenden Kraftfahrzeugs erfassbarer Anteil der vorbestimmten Umgebung ermittelt wird. Erkennt das anfragende Kraftfahrzeug mithin Lücken in seiner Umgebungserkennung, kann gezielt für diese Lücke eine Auswahlinformation in die Anfragenachricht integriert werden, so dass aus der Datenbank die Lücke auffüllende Umfelddaten erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan eines Ausführungsbeispiels des erfindungsgemäßen Verfahrens,
- Fig. 2: eine vorbestimmte Umgebung zur Durchführung des Verfahrens, und
- Fig. 3: ein im Rahmen des Verfahrens verwendbares Kraftfahrzeug.

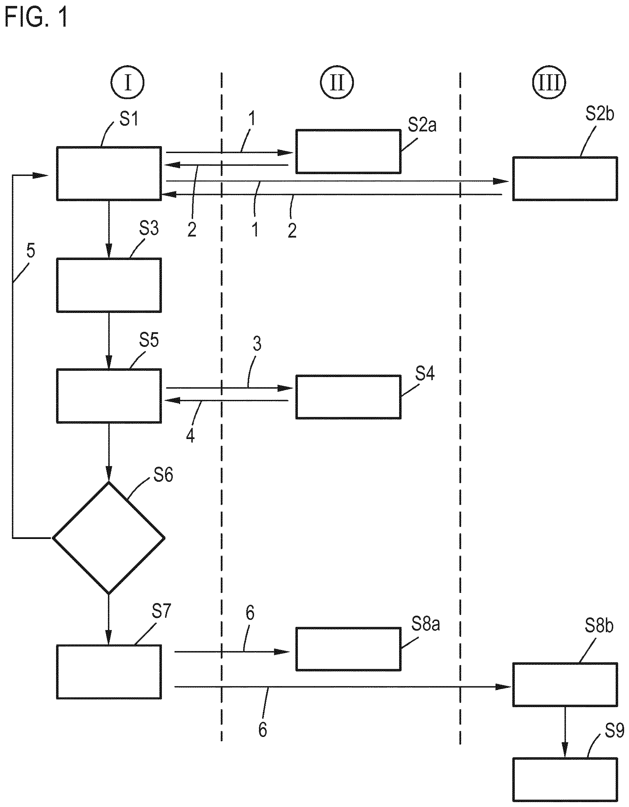

Fig. 1 zeigt einen schematischen Ablaufplan eines Ausführungsbeispiels des erfindungsgemäßen Verfahrens. Bei diesem geht es darum, insbesondere durch Sensoren von Kraftfahrzeugen gewonnene Informationen über dynamische Objekte in einer vorbestimmten Umgebung nicht nur möglichst zuverlässig zu erhalten, sondern auch auf einfache und zentralisierte Weise anderen Kraftfahrzeugen in der vorbestimmten Umgebung bereitzustellen. Die Datenbank, die hier als eine Umfeldkarte ausgebildet ist und neben Informationen über dynamische Objekte auch Informationen zu statischen Objekten enthält, insbesondere auch zu ihren Zustand wechselnden statischen Objekten wie Ampeln, wird dabei aufgrund eingehender Sensordaten eines als Server agierenden Kraftfahrzeugs selbst sowie weiterer Kraftfahrzeuge in der vorbestimmten Umgebung ständig dynamisch aktualisiert und verfeinert, wobei selbstverständlich auch eine statistische Auswertung mehrfach vorhandener, gleicher Informationen erfolgen kann, um eine besonders hochgenaue Umfeldkarte als Datenbank zur Verfügung zu stellen. Als vorbestimmte Umgebung soll beispielhaft eine Kreuzung mit dem sie umgebenden Bereich betrachtet werden.

Die erste Erstellung der Datenbank sowie deren Neuerstellung basiert hierbei auf einer Basiskarte der vorbestimmten Umgebung, die von einer zur Kommunikation mit Kraftfahrzeugen ausgebildeten Infrastruktureinrichtung im Bereich der vorbestimmten Umgebung selbst abrufbar vorgehalten werden kann, jedoch auch beispielsweise von einer zentralen Recheneinrichtung über das Internet bzw. aus einer sonstigen Cloud erhalten werden kann. Die Basiskarte enthält statische, unveränderliche Objekte in der vorbestimmten Umgebung, so dass die diese betreffenden Umfelddaten nicht mehr ausgewertet werden müssen, da diese statischen Objekte unverändert oder zumindest nur auf einer sehr langsamen Zeitskala veränderlich vorliegen.

Das Verfahren nutzt eines der im Bereich der vorbestimmten Umgebung befindlichen Kraftfahrzeuge als einen Server, der die Datenbank aktuell hält und an andere Kraftfahrzeuge in der vorbestimmten Umgebung bei Empfang einer Anfragenachricht wenigstens einen Teil der Umfelddaten der Datenbank zur Verfügung stellt. Fig. 1 erläutert Vorgänge des Ausführungsbeispiels schematisch, wobei der Einfachheit halber hier nur zwischen Domänen I, II und III eines ersten, eines zweiten und eines dritten Kraftfahrzeugs unterschieden wird. Das bedeutet, die in den entsprechenden Domänen I, II und III beschriebenen Verfahrensschritte werden durch jeweils wenigstens ein Steuergerät des jeweiligen Kraftfahrzeugs durchgeführt, wobei eine Kraftfahrzeug-zu-Kraftfahrzeug-Kommunikationseinrichtung für jedes Kraftfahrzeug genutzt wird, um die Kommunikation herzustellen.

Dabei soll zunächst die Aktualisierung der Datenbank genauer diskutiert werden. Hierzu sendet das erste Kraftfahrzeug, das aktuell als Server dient, in einem Schritt S1 gemäß den Pfeilen 1 eine Abfragenachricht an alle weiteren Kraftfahrzeuge in der vorbestimmten Umgebung, hier das zweite Kraftfahrzeug und das dritte Kraftfahrzeug. Bei Empfang der Abfragenachricht in dem zweiten bzw. dritten Kraftfahrzeug werden in Schritten S2a bzw. S2b aktuelle Umfelddaten der Sensoren des zweiten bzw. des dritten Kraftfahrzeugs, die dynamische Objekte in der vorbestimmten Umgebung betreffen, zusammengestellt und gemäß den Pfeilen 2 an das als Server dienende erste Kraftfahrzeug zurückübersandt. Dabei sei darauf hingewiesen, dass die Abfragenachricht durchaus auch eine Beschränkungsinformation enthalten kann, sich mithin die Abfrage von Umfelddaten weiterer Kraftfahrzeuge auf bestimmte Subumgebungen der vorbestimmten Umgebung beziehen kann, beispielsweise solche, die das als Server dienende erste Kraftfahrzeug mit seinen Sensoren nicht erfassen kann, und/oder sich auf bestimmte Arten von Umfelddaten beziehen kann, beispielsweise Sensordaten von Umfeldsensoren, die das als Server dienende erste Kraftfahrzeug nicht oder nicht für eine bestimmte Subumgebung aufweist. Ist das als Server dienende erste Kraftfahrzeug beispielsweise nicht mit Radarsensoren ausgestattet, können Radardaten als Umfelddaten von den weiteren Kraftfahrzeugen gezielt abgefragt werden. So ist über die Verwendung einer Beschränkungsinformation der Datenverkehr reduzierbar.

Im Schritt S3 werden, insbesondere parallel zum Schritt S1, seitens des ersten Kraftfahrzeugs auch dessen Sensoren, insbesondere die Umfeldsensoren, genutzt, um weitere aktuelle Umfelddaten, die zur Aktualisierung der Datenbank genutzt werden können, zu erhalten. Ebenso im Schritt S3 findet dann die Aktualisierung der Datenbank unter Nutzung der über die eigenen Sensoren ermittelten Umfelddaten und der von anderen Kraftfahrzeugen gemäß der Pfeile 2 übermittelten Umfelddaten statt. Es werden also letztlich alle vorliegenden Daten an einer zentralen Stelle im ersten Kraftfahrzeug zusammengeführt, so dass ein hochaktueller, dynamischer Datenpool entsteht, der über das als Server dienende erste Kraftfahrzeug allen anfragenden Kraftfahrzeugen zur Verfügung gestellt wird.

So sendet beispielsweise das zweite Kraftfahrzeug in einem Schritt S4 als Broadcast eine Anfragenachricht aus, vgl. Pfeil 3. Wird diese Anfragenachricht 3, die bei Kenntnis des Servers durch das zweite Kraftfahrzeug auch direkt an das erste Kraftfahrzeug gerichtet werden kann, von dem ersten Kraftfahrzeug in einem Schritt S5 empfangen, wertet das erste Kraftfahrzeug die Anfragenachricht hinsichtlich einer Auswahlinformation, die die Zahl der zu übersendenden Umfelddaten der Datenbank begrenzt, aus. Beispielsweise kann die Auswahlinformation auch hier Subumgebungen beschreiben, die dem zweiten Kraftfahrzeug vorausliegen und/oder die durch das zweite Kraftfahrzeug bzw. seine Sensoren nicht selbst erfasst werden können. Die der Auswahlinformation entsprechenden Umfelddaten, die auf dynamische Objekte und wechselnde verkehrsrelevante Zustände aufweisende statische Objekte bezogen sind, werden gemäß dem Pfeil 4 dann an das zweite Kraftfahrzeug übersandt und können dort entsprechend verwendet werden, insbesondere zur Ergänzung einer eigenen, gegebenenfalls ebenso auf der Basiskarte basierenden Umfeldkarte, die dann durch Funktionen von verschiedenen Fahrzeugsystemen genutzt werden kann. Es ist in Ausführungsformen selbstverständlich auch denkbar, dass, wenn keine Auswahlinformation vorliegt, die gesamten Umfelddaten der Datenbank, die sich auf dynamische Objekte und verkehrsrelevante wechselnde Zustände aufweisende statische Objekte beziehen, an das anfragende Kraftfahrzeug übermittelt werden.

In einem Schritt S6 wird seitens des als Server dienenden, ersten Kraftfahrzeugs überprüft, ob ein Übergabekriterium erfüllt ist. Das erste Kraftfahrzeug wurde als Server ausgewählt, weil es ein Serverkriterium erfüllt hat, das bedeutet im vorliegenden Fall, es war das einem definierten Ort in der vorbestimmten Umgebung am nächsten befindliche Kraftfahrzeug. Der definierte Ort kann sich dabei auf ein statisches Objekt beziehen, aber gegebenenfalls auch auf ein bestimmtes dynamisches Objekt, insbesondere eines, dessen Kritikalitätswert am höchsten ist, das also am relevantesten für die Beurteilung von Verkehrssituationen ist und für das am notwendigsten Daten benötigt werden. In diesem Kontext sei noch angemerkt, dass ein derartiges Serverkriterium selbstverständlich von jedem Kraftfahrzeug selbst überprüft werden kann, solange der definierte Ort, welcher sich ja auch dynamisch ändern kann, genauso identifizierbar ist wie andere Kraftfahrzeuge und deren Positionen relativ zum Ort, was durch die Verwendung der Datenbank bzw. der in ihr enthaltenen aktuellen Umfelddaten genauso ermöglicht wird wie es gegebenenfalls auch durch die Verwendung von Umfelddaten eigener Sensoren erfolgen kann. Auch die Zuordnung von Kommunikationspartnern zu in Umfelddaten beschriebenen Objekten lässt sich leicht ermöglichen, indem eine entsprechende Zusatzinformation in übersandten Nachrichten enthalten ist, die einen Abgleich erlaubt.

Vorliegend ist das Übergabekriterium dadurch gegeben, dass das erste Kraftfahrzeug die vorbestimmte Umgebung verlässt. Ist dies nicht der Fall, fährt das erste Kraftfahrzeug gemäß dem Pfeil 5 mit seiner Serverrolle fort. Verlässt das erste Kraftfahrzeug jedoch tatsächlich die vorbestimmte Umgebung, so gibt es in einem Schritt S7 die Serverrolle ab. Hierzu ist in diesem Ausführungsbeispiel konkret vorgesehen, dass die Datenbank per Broadcast gemäß den Pfeilen 6 an die weiteren Kraftfahrzeuge übermittelt wird, die jeweils in Schritten S8a bzw. S8b überprüfen, ob das Serverkriterium für sie erfüllt ist, hier mithin, ob sie das dem definierten Ort am nächsten befindliche Kraftfahrzeug sind. Vorliegend ist dies für das dritte Kraftfahrzeug der Fall, so dass dieses die Datenbank empfängt, speichert und in einem Schritt S9 selbst die Serverrolle übernimmt, bis wiederum das Übergabekriterium erfüllt ist.

Es sei darauf hingewiesen, dass selbstverständlich auch andere Übergabekriterien verwendet werden können, insbesondere mit dem Serverkriterium gekoppelte Übergabekriterien. So ist es durchaus möglich, dass eine häufigere Übergabe immer an das aktuell am nächsten am definierten Ort befindliche Kraftfahrzeug erfolgt. Ferner sei darauf hingewiesen, dass es durchaus auch denkbar ist, im Rahmen des Schrittes S7 bereits zu bestimmen, welches andere Kraftfahrzeug das Serverkriterium erfüllt und eine direkte, gezielte Kommunikation zu diesem anderen Kraftfahrzeug aufzubauen.

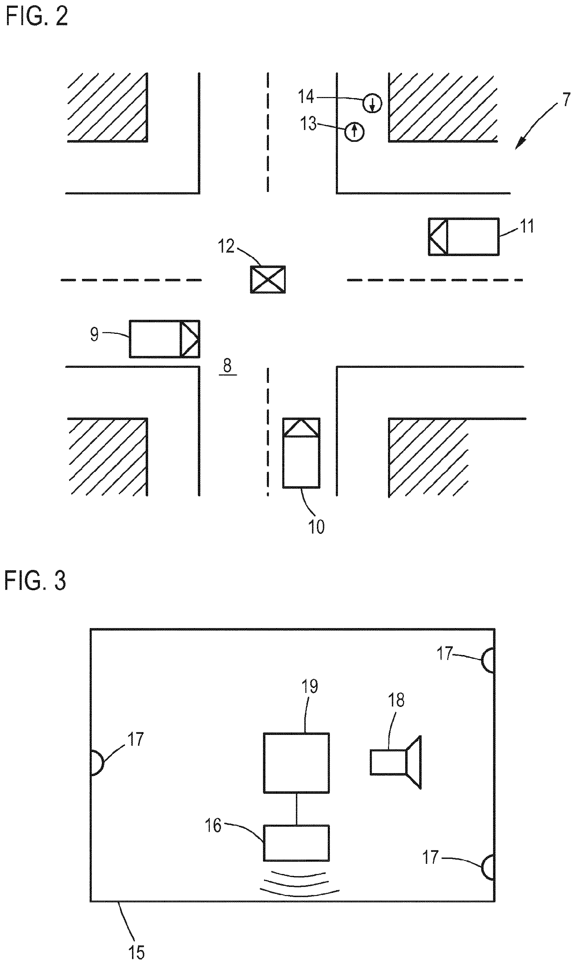

Fig. 2 zeigt zur weiteren Erläuterung eine Verkehrssituation in einer vorbestimmten Umgebung 7, hier einer Kreuzung 8. Gezeigt sind drei Kraftfahrzeuge 9, 10, 11, wobei vorliegend das Kraftfahrzeug 9 als Server dient, da es einem ausgezeichneten Ort, beispielsweise der Position einer die Kreuzung erhellenden, in deren Mitte angeordneten Straßenlaterne 12, am nächsten ist; die Serverfunktion kann jedoch auch durch die Nähe zu dynamischen Objekten oder dergleichen definiert werden.

Gezeigt sind ferner zwei Fußgänger 13, 14 als dynamische Objekte.

Ersichtlich können vorliegend die Kraftfahrzeuge 9 und 10 jeweils die Position der Fußgänger 13 und 14 detektieren. Das Kraftfahrzeug 10 jedoch kann nicht die Ausrichtung des Fußgängers 14 feststellen, benötigt diese jedoch zur Situationsinterpretation. Die Ausrichtung des Fußgängers 14 kann jedoch durch das Kraftfahrzeug 9 mittels dessen Sensoren erkannt werden. Das Kraftfahrzeug 11 wiederum kann den Fußgänger 13 komplett vermessen, jedoch den Fußgänger 14 überhaupt nicht mittels eigener Sensorik wahrnehmen. Durch die von dem als Server agierenden Kraftfahrzeug 9 zur Verfügung gestellte, hochaktuell, dynamisch aktualisierte Datenbank können jedoch entsprechende Anfragenachrichten der Kraftfahrzeuge 10, 11 beantwortet werden, so dass die fehlende Information dort vorhanden ist und die Situationsinterpretation korrekt durchgeführt werden kann.

Fig. 3 zeigt schließlich eine Prinzipskizze eines Kraftfahrzeugs 15, das im Rahmen der vorliegenden Erfindung eingesetzt werden kann. Das Kraftfahrzeug 15 weist eine Kraftfahrzeug-zu-Kraftfahrzeug-Kommunikationseinrichtung 16 auf, über die Nachrichten empfangen und ausgesendet werden können. Ferner ist das Kraftfahrzeug mit verschiedenen Sensoren zur Erfassung des Umfelds versehen, wobei vorliegend beispielhaft Radarsensoren 17 und eine Kamera 18 gezeigt sind.

In einem Steuergerät 19 des Kraftfahrzeugs 15 können die verschiedenen Schritte des erfindungsgemäßen Verfahrens ausgeführt werden, und zwar sowohl dann, wenn das Kraftfahrzeug 15 als Server dient, als auch dann, wenn es lediglich auf Abfragenachrichten reagiert bzw. Anfragenachrichten senden möchte.

## Patentansprüche

1. Verfahren zur Ermittlung und Bereitstellung einer auf eine vorbestimmte Umgebung (7) bezogenen, Umfelddaten bezüglich wenigstens der dynamischen Objekte der Umgebung (7) enthaltenden Datenbank, wobei die Umfelddaten durch Sensoren wenigstens eines Kraftfahrzeugs (9, 10, 11, 15) ermittelt werden,
**dadurch gekennzeichnet,**
**dass** die Datenbank durch ein als Server dienendes Kraftfahrzeug (9, 10, 11, 15) in der vorbestimmten Umgebung (7) vorgehalten wird, welches als zentrale Datensammelstelle dient und zur Kommunikation mit anderen Kraftfahrzeugen (9, 10, 11, 15) ausgebildet ist, wobei das als Server dienende Kraftfahrzeug (9, 10, 11, 15) bei Empfang einer Anfragenachricht wenigstens einen Teil der Umfelddaten der Datenbank an das anfragende Kraftfahrzeug (9, 10, 11, 15) übermittelt und zur Aktualisierung der Datenbank zum einen eine Abfragenachricht zur Übersendung von wenigstens die dynamischen Objekte betreffenden Umfelddaten an andere Kraftfahrzeuge (9, 10, 11, 15) übersendet und zum anderen mittels eigener Sensoren wenigstens die dynamischen Objekte betreffende Umfelddaten aufnimmt, wobei die Datenbank anhand der übersendeten und aufgenommenen Umfelddaten aktualisiert wird.

2. Verfahren nach Anspruch 1,
**dadurch gekennzeichnet,**
**dass** bei Eintritt eines Übergabekriteriums das bisher als Server dienende Kraftfahrzeug (9, 10, 11, 15) die Datenbank an ein als neuer Server dienendes Kraftfahrzeug (9, 10, 11, 15) übermittelt, welches die Serverrolle übernimmt.

3. Verfahren nach Anspruch 2,
**dadurch gekennzeichnet,**
**dass** im Rahmen des Übergabekriteriums überprüft wird, ob ein weiteres, als zukünftiger Server dienendes Kraftfahrzeug (9, 10, 11, 15) näher an wenigstens einem durch die Kraftfahrzeuge (9, 10, 11, 15) detektierbaren, ausgezeichneten Ort innerhalb der Umgebung (7) befindlich ist als das aktuell als Server dienende Kraftfahrzeug (9, 10, 11, 15), und/oder, ob das aktuell als Server dienende Kraftfahrzeug (9, 10, 11, 15) die vorbestimmte Umgebung (7) verlässt.

4. Verfahren nach Anspruch 3,
**dadurch gekennzeichnet,**
**dass** der Ort auf ein statisches und/oder dynamisches Objekt in der Datenbank bezogen ist.

5. Verfahren nach einem der vorangehenden Ansprüche,
**dadurch gekennzeichnet,**
**dass** die Umfelddaten der Datenbank, insbesondere unter Berücksichtigung einer in der Anfragenachricht enthaltenen relativen Positionsinformation, vor der Übermittlung auf ein Koordinatensystem des anfragenden Kraftfahrzeugs (9, 10, 11, 15) umgerechnet werden.

6. Verfahren nach Anspruch 4 oder 5,
**dadurch gekennzeichnet,**
**dass** zur Zuordnung von durch die Kraftfahrzeug (9, 10, 11, 15)-zu-Kraftfahrzeug (9, 10, 11, 15)-Kommunikation erreichbaren Kraftfahrzeugen (9, 10, 11, 15) zu in der Datenbank enthaltenen Objekten von den Kraftfahrzeugen (9, 10, 11, 15) empfangene Umfelddaten mit den auf ein Koordinatensystem des aktuell als Server dienenden Kraftfahrzeugs (9, 10, 11, 15) bezogenen Umfelddaten der Datenbank abgeglichen werden.

7. Verfahren nach einem der vorangehenden Ansprüche,
**dadurch gekennzeichnet,**
**dass** in die Datenbank auch statische, einen verkehrsrelevanten, wechselnden Zustand aufweisende Objekte aufgenommen werden.

8. Verfahren nach einem der vorangehenden Ansprüche,
**dadurch gekennzeichnet,**
**dass** bei einer Neuerstellung oder Aktualisierung der Datenbank neben übersendeten bzw. aufgenommenen Umfelddaten und/oder zur Einordnung von auf eine Anfragenachricht von dem als Server dienenden Kraftfahrzeug (9, 10, 11, 15) erhaltener Umfelddaten eine von einer feststehenden Servereinrichtung erhaltene, statische Objekte in der vorbestimmten Umgebung (7) beschreibende Basiskarte verwendet wird.

9. Verfahren nach einem der vorangehenden Ansprüche,
**dadurch gekennzeichnet,**
**dass** die Anfragenachricht eine eine bestimmte Subumgebung der vorbestimmten Umgebung (7) beschreibende Auswahlinformation enthält, wobei nur Umfelddaten der Subumgebung an das anfragende Kraftfahrzeug (9, 10, 11, 15) übermittelt werden.

10. Verfahren nach Anspruch 9,
**dadurch gekennzeichnet,**
**dass** die Subumgebung als nicht oder nicht vollständig durch Sensoren des anfragenden Kraftfahrzeugs (9, 10, 11, 15) erfassbarer Anteil der vorbestimmten Umgebung (7) ermittelt wird.

## Claims

1. Method for determining and providing a database, which relates to a predetermined environment (7) and contains environmental data relating to at least the dynamic objects of the environment (7), wherein the environmental data is determined by sensors on at least one motor vehicle (9, 10, 11, 15)
**characterised in that**,
the database is maintained in the predetermined environment (7) by a motor vehicle (9, 10, 11, 15) acting as a server, which acts as a central data warehouse and is designed to communicate with other motor vehicles (9, 10, 11, 15), wherein, on receipt of a request message, the motor vehicle (9, 10, 11, 15) acting as a server transmits at least some of the environmental data in the database to the requesting motor vehicle (9, 10, 11, 15) and, to update the database, on the one hand, transmits a query message for transmitting at least the environmental data relating to the dynamic objects to other motor vehicles (9, 10, 11, 15) and, on the other hand, by means of its own sensors, captures at least the environmental data relating to the dynamic objects, wherein the database is updated using the environmental data transmitted and captured..

2. Method according to Claim 1,
**characterised in that**,
in the event of a transfer criterion, the motor vehicle (9, 10, 11, 15) previously acting as a server transfers the database to a motor vehicle (9, 10, 11, 15) acting as a new server, which assumes the role of server.

3. Method according to Claim 2,
**characterised in that**,
within the framework of the transfer criterion, it is verified whether another motor vehicle (9, 10, 11, 15) acting as a future server is located closer to at least one identified location within the environment (7), which is detectable by the motor vehicles (9, 10, 11, 15), than the motor vehicle (9, 10, 11, 15) currently acting as a server, and/or, whether the motor vehicle (9, 10, 11, 15) currently acting as a server is leaving the predetermined environment (7).

4. Method according to Claim 3,
**characterised in that**,
the location relates to a static and/or dynamic object in the database.

5. Method according to any one of the preceding claims,
**characterised in that**;
the environmental data in the database, in particular taking account of relative position information contained in the request message, is converted prior to transmission to a coordinate system of the requesting motor vehicle (9, 10, 11, 15).

6. Method according to Claim 4 or 5,
**characterised in that**
to assign the motor vehicles (9, 10, 11, 15) accessible via the motor vehicle (9, 10, 11, 15) to motor vehicle (9, 10, 11, 15) communication to the objects contained in the database for the motor vehicles (9, 10, 11, 15), environmental data received is synchronised with the environmental data in the database of a coordinate system of the motor vehicle (9, 10, 11, 15) currently acting as a server.

7. Method according to any one of the preceding claims,
**characterised in that**,
static objects, indicating a changing traffic-related state, are also recorded in the database.

8. Method according to any one of the preceding claims,
**characterised in that**,
when regenerating or updating the database, in addition to transmitted or captured environmental data and/or to classify environmental data received in response to a request message from the motor vehicle (9, 10, 11, 15) acting as a server, a static object received from a static server device is used in the base map describing the predetermined environment (7).

9. Method according to any one of the preceding claims,
**characterised in that**,
the request message contains selection information describing a particular sub-environment of the predetermined environment (7), wherein only environmental data for the sub-environment is transmitted to the requesting motor vehicle (9, 10, 11, 15).

10. Method according to Claim 9,
**characterised in that**,
the sub-environment is determined as a non-detectable or not completely detectable proportion of the predetermined environment (7) by sensors of the requesting motor vehicle (9, 10, 11, 15).

## Revendications

1. Procédé de détermination et de fourniture d'une banque de données liée à un environnement (7) prédéfini, contenant des données d'environnement se rapportant au moins aux objets dynamiques de l'environnement (7), dans lequel les données d'environnement sont déterminées par des capteurs d'au moins un véhicule automobile (9, 10, 11, 15),
**caractérisé en ce**
**que** la banque de données est préparée dans l'environnement (7) prédéfini par un véhicule automobile (9, 10, 11, 15) servant de serveur, qui sert de point de collecte de données central et est conçu pour la communication avec d'autres véhicules automobiles (9, 10, 11, 15), dans lequel le véhicule automobile (9, 10, 11, 15) servant de serveur transmet, lors d'une réception d'un message de demande, au moins une partie des données d'environnement de la banque de données au véhicule automobile (9, 10, 11, 15) demandeur et, pour la mise à jour de la banque de données, d'une part envoie un message de demande pour l'envoi de données d'environnement concernant au moins les objets dynamiques à d'autres véhicules automobiles (9, 10, 11, 15) et d'autre part enregistre au moyen de ses propres capteurs des données d'environnement concernant au moins les objets dynamiques, dans lequel la banque de données est mise à jour à l'aide des données d'environnement envoyées et enregistrées.

2. Procédé selon la revendication 1,
**caractérisé en ce**
**que**, lors de l'apparition d'un critère de transfert, le véhicule automobile (9, 10, 11, 15) servant jusqu'à présent de serveur transmet la banque de données à un véhicule automobile (9, 10, 11, 15) servant de nouveau serveur, qui assume le rôle de serveur.

3. Procédé selon la revendication 2,
**caractérisé en ce**
**qu'**il est vérifié, dans le cadre du critère de transfert, si un autre véhicule automobile (9, 10, 11, 15) servant de futur serveur se trouve plus près d'au moins un lieu marqué, pouvant être détecté par les véhicules automobiles (9, 10, 11, 15), à l'intérieur de l'environnement (7) que le véhicule automobile (9, 10, 11, 15) servant actuellement de serveur, et/ou si le véhicule automobile (9, 10, 11, 15) servant actuellement de serveur quitte l'environnement (7) prédéfini.

4. Procédé selon la revendication 3,
**caractérisé en ce**
**que** le lieu est lié à un objet statique et/ou dynamique dans la banque de données.

5. Procédé selon l'une quelconque des revendications précédentes,
**caractérisé en ce**
**que** les données d'environnement de la banque de données sont recalculées, en particulier en tenant compte d'une information de position relative contenue dans le message de demande, avant la transmission, pour un système de coordonnées du véhicule automobile (9, 10, 11, 15) demandeur.

6. Procédé selon la revendication 4 ou 5,
**caractérisé en ce**
**que**, pour l'association de véhicules automobiles (9, 10, 11, 15) pouvant être joints par la communication de véhicule automobile (9, 10, 11, 15) à véhicule automobile (9, 10, 11, 15) à des objets contenus dans la banque de données, des données d'environnement reçues des véhicules automobiles (9, 10, 11, 15) sont comparées à des données d'environnement de la banque de données liées à un système de coordonnées du véhicule automobile (9, 10, 11, 15) servant actuellement de serveur.

7. Procédé selon l'une quelconque des revendications précédentes,
**caractérisé en ce**
**que** des objets statiques présentant un état changeant significatif pour la circulation sont également enregistrés dans la banque de données.

8. Procédé selon l'une quelconque des revendications précédentes,
**caractérisé en ce**
**que**, lors d'une création ou d'une mise à jour de la banque de données, en plus de données d'environnement envoyées ou enregistrées, et/ou pour le classement de données d'environnement obtenues sur un message de demande du véhicule automobile (9, 10, 11, 15) servant de serveur, une carte de base décrivant, dans l'environnement (7) prédéfini, des objets statiques obtenus d'un dispositif de serveur fixe est utilisée.

9. Procédé selon l'une quelconque des revendications précédentes,
**caractérisé en ce**
**que** le message de demande contient une information de sélection décrivant un certain sous-environnement de l'environnement (7) prédéfini, dans lequel uniquement des données d'environnement du sous-environnement sont transmises au véhicule automobile (9, 10, 11, 15) demandeur.

10. Procédé selon la revendication 9,
**caractérisé en ce**
**que** le sous-environnement est déterminé en tant que partie de l'environnement (7) prédéfini non détectable ou non détectable intégralement par des capteurs du véhicule automobile (9, 10, 11, 15) demandeur.
